# EUROPEAN PATENT APPLICATION

(11) **EP 4 793 863 A1**
(43) Date of publication of application: **19.08.2026**
(21) Application number: 24879098.2
(22) Date of filing: 17.10.2024
(51) Int. Cl.: G06Q 30/0201, G06F 16/951, G06F 16/953, G06F 16/955, G06N 3/0455

(54) **USER IDENTIFICATION METHOD AND COMPUTING DEVICE**

(30) Priority: 19.10.2023 CN 202311362375
(71) Applicant: Hangzhou Alibaba International Internet Industry Co., Ltd., Hangzhou, Zhejiang 310052 (CN)
(72) Inventor: SONG, Yaohua, Hangzhou, Zhejiang 310052 (CN); LI, Xiaowei, Hangzhou, Zhejiang 310052 (CN)
(74) Representative: Wu, Ting
(86) International application number: PCT/CN2024/125609
(87) International publication number: WO 2025/082458

(57) **Abstract**

Embodiments of the present disclosure provide a user identification method and a computing device. First user information of a target user is acquired; at least one search engine is invoked based on the first user information to perform a query, obtaining at least one target URL corresponding to the first user information; the at least one target URL is accessed, and webpage content in at least one webpage corresponding to the at least one target URL is extracted; based on the webpage content corresponding to the target user, it is determined whether the target user is a predetermined user type. The technical solutions provided by the embodiments of the present disclosure improve the efficiency of identifying target users.

## Description

This present disclosure claims priority to the Chinese patent application filed with China National Intellectual Property Administration (CNIPA) on October 19, 2023, with application number 202311362375.8, and titled "User Identification Method and Computing Device," the entire contents of which are incorporated herein by reference.

### TECHNICAL FIELD

Embodiments of the present disclosure relate to the computer application technology field, and more particularly to a user identification method and computing device.

### BACKGROUND ART

In some online systems that provide objects for users to perform interactions, such as e-commerce platforms that provide goods for users to purchase, users may be individual users or enterprise users, etc. In order to provide targeted services to users, particularly in online systems that primarily serve a specified user type such as enterprise users, there is a need to identify user types.

In the prior art, manual review is typically used to identify whether a user is an enterprise user or the like based on the user's registration information in the online system, resulting in low identification efficiency and low accuracy.

### SUMMARY

Embodiments of the present disclosure provide a user identification method, apparatus, and computing device, to address the problems of low efficiency and low accuracy in identifying target users in the prior art.

In a first aspect, embodiments of the present disclosure provide a user identification method, comprising:
acquiring first user information of a target user;
invoking at least one search engine to perform a query based on the first user information, to obtain at least one target URL corresponding to the first user information;
accessing the at least one target URL, and extracting webpage content in at least one webpage corresponding to the at least one target URL;
determining, based on the webpage content corresponding to the target user, whether the target user is of a predetermined user type.

Optionally, the determining, based on the webpage content corresponding to the target user, whether the target user is of a predetermined user type comprises:
generating first prompt information based on the webpage content corresponding to each of at least one target user;
inputting the first prompt information into a second large language model, to instruct the second large language model to determine, in conjunction with the webpage content, whether each of the at least one target user is of the predetermined user type.

Optionally, the inputting the first prompt information into a second large language model, to instruct the second large language model to determine, in conjunction with the webpage content, whether each of the at least one target user is of the predetermined user type comprises:
inputting the first prompt information into a second large language model, to instruct the second large language model to determine, in conjunction with the webpage content, whether each of the at least one target user is of the predetermined user type, and, in a case where any target user is of the predetermined user type, acquiring second user information of at least one specified information type corresponding to the target user.

Optionally, the first user information includes one or more of the target user's name, address, and communication account;
the acquiring first user information of the target user comprises:
identifying the first user information of the target user from at least one of the target user's registration information, session information, and order information.

Optionally, the method further comprises:
storing the first user information to local memory;
the identifying the first user information of the target user from at least one of the target user's registration information, session information, and order information comprises: querying, from the local memory, the first user information corresponding to the target user; and in a case where the query fails, identifying the first user information of the target user from at least one of the target user's registration information, session information, and order information;
or, the method further comprises:
   storing the webpage content corresponding to the target user to local memory;
   the invoking at least one search engine for querying based on the first user information to obtain at least one target URL corresponding to the first user information comprises: querying, from the local memory, the webpage content corresponding to the target user; and in a case where the query fails, invoking at least one search engine for querying based on the first user information to obtain at least one target URL corresponding to the first user information.

Optionally, the identifying the first user information of the target user from at least one of the target user's registration information, session information, and order information comprises:
generating third prompt information based on at least one of the target user's registration information, session information, and order information;
inputting the third prompt information into the first large language model to instruct the first large language model to extract the first user information of the target user from the at least one piece of information.

Optionally, the method further comprises:
in the case where webpage access for any target URL fails, using summary information corresponding to the target URL as the extracted webpage content.

Optionally, the generating first prompt information based on webpage content corresponding to at least one target user respectively comprises:
generating first prompt information based on webpage content corresponding to at least one target user respectively, an execution instruction, and an output requirement; wherein the execution instruction is used to instruct the second large language model to determine, based on the webpage content corresponding to at least one target user respectively, whether the at least one target user is of a predetermined user type; and the output requirement is used to instruct the second large language model, in the case where any target user is of a predetermined user type, to acquire the second user information of the target user and provide the information source of the second user information.

Optionally, the method further comprises:
generating second prompt information based on the second user information corresponding to at least one target user respectively;
inputting the second prompt information into the second large language model to instruct the second large language model to determine, in combination with the second user information, whether each of the at least one target user is of a predetermined user type.

Optionally, the method further comprises:
acquiring the output result of the second large language model;
in the case where it is determined based on the output result that any target user is of a predetermined user type, determining the user level of the target user based on the second user information of the target user.

Optionally, the method further comprises:
determining, according to the user level of the target user, benefit information allocated to the target user; or determining, according to the user level of the target user, in the case where the target user performs a target behavior, executing a processing operation corresponding to the user level.

Optionally, the webpage content comprises webpage information extracted from each target URL; the at least one target user comprises one target user;
the generating first prompt information based on webpage content corresponding to at least one target user respectively comprises:
generating first prompt information respectively based on webpage information extracted from each target URL corresponding to the target user;
the inputting the first prompt information into the second large language model comprises:
   inputting at least one first prompt information into the second large language model respectively, to instruct the second large language model to determine, in combination with the respectively corresponding webpage information, whether the target user is of a predetermined user type, and, in a case where the target user is of the predetermined user type, acquiring third user information corresponding to the target user;
   generating fourth prompt information based on the third user information corresponding to the at least one target URL respectively;
   inputting the fourth prompt information into the second large language model to instruct the second large language model to obtain second user information corresponding to at least one specified information type by comparing the third user information corresponding to the at least one target URL respectively.

In a second aspect, embodiments of the present disclosure provide a computing device, comprising a processing component and a storage component; the storage component stores one or more computer instructions; the one or more computer instructions are configured to be invoked and executed by the processing component to implement the user identification method as described in the first aspect above.

In a third aspect, embodiments of the present disclosure provide a computer storage medium storing a computer program, which, when executed by a computer, implements the user identification method as described in the first aspect above.

In a fourth aspect, embodiments of the present disclosure provide a computer program product comprising a computer program carried on a computer-readable storage medium, which, when executed in a computer, implements the user identification method as described in the first aspect above.

Embodiments of the present disclosure acquire first user information of a target user, invoke at least one search engine to perform a query based on the first user information to obtain at least one target URL corresponding to the first user information, access the at least one target URL, extract webpage content in at least one webpage corresponding to the at least one target URL, and determine, based on the webpage content corresponding to the target user, whether the target user is of a predetermined user type. By searching data across the entire network and combining it with webpage content extracted from webpages to identify whether the target user is of a predetermined user type, the accuracy of identification is improved, manual identification is eliminated, the efficiency of identifying target users is improved, and identification costs are reduced.

These and other aspects of the present disclosure will be more clearly understood in the description of the following embodiments.

### BRIEF DESCRIPTION OF THE DRAWINGS

In order to more clearly illustrate the technical solutions in the embodiments of the present disclosure or in the prior art, the drawings required for use in the description of the embodiments or the prior art will be briefly introduced below. Obviously, the drawings described below are some embodiments of the present disclosure, and those of ordinary skill in the art may also obtain other drawings based on these drawings without any creative effort.
FIG. 1 illustrates a flowchart of one embodiment of a user identification method provided by the present disclosure;
FIG. 2 illustrates a schematic diagram of scenario interaction in a practical application of embodiments of the present disclosure;
FIG. 3 illustrates a structural schematic diagram of an embodiment of a user identification apparatus provided by the present disclosure;
FIG. 4 illustrates a structural schematic diagram of an embodiment of a computing device provided by the present disclosure.

### DETAILED DESCRIPTION OF EMBODIMENTS

In order to enable those skilled in the art to better understand the solutions of the present disclosure, the technical solutions in the embodiments of the present disclosure will be clearly and completely described below in conjunction with the drawings in the embodiments of the present disclosure.

In some processes described in the specification and claims of the present disclosure and in the above-mentioned drawings, a plurality of operations appearing in a specific order are included, but it should be clearly understood that these operations may be performed out of the order in which they appear herein or may be performed in parallel. The sequence numbers of the operations, such as 101, 102, etc., are merely used to distinguish different operations, and the sequence numbers themselves do not represent any execution order. In addition, these processes may include more or fewer operations, and these operations may be performed sequentially or in parallel. It should be noted that the descriptions of "first," "second," and so on herein are used to distinguish different messages, devices, modules, and the like, and do not represent any order of precedence, nor do they limit "first" and "second" to being different types.

The technical solutions of the embodiments of the present disclosure may be applied to scenarios in which an online system provides objects for users to interact with, such as an e-commerce platform that provides goods for users to purchase, where users may be individual users or enterprise users. In order to provide targeted services to users, particularly in online systems that primarily serve a specified user type such as enterprise users, there is currently a need to identify user types.

As described in the background art, the current common approach is to use manual review to identify whether a user is an enterprise user based on the user's registration information in the online system, which results in low identification efficiency and low accuracy.

In order to improve identification efficiency and accuracy, the inventors, through a series of studies, proposed the technical solution of the present disclosure: by acquiring first user information of a target user, invoking at least one search engine based on the first user information to perform a query, obtaining at least one target URL corresponding to the first user information, accessing the at least one target URL, extracting webpage content from at least one webpage corresponding to the at least one target URL, and determining whether the target user is a predetermined user type based on the webpage content corresponding to the target user; by adopting a method of searching data across the entire network and combining it with the webpage content extracted from webpages, identifying whether the target user is a predetermined user type, thereby improving identification accuracy, eliminating the need for manual identification, improving the efficiency of identifying the target user, and reducing identification costs.

The technical solutions in the embodiments of the present disclosure will be clearly and completely described below in conjunction with the drawings in the embodiments of the present disclosure. Obviously, the described embodiments are only a part of the embodiments of the present disclosure, and not all of the embodiments. Based on the embodiments in the present disclosure, all other embodiments obtained by those skilled in the art without making creative efforts shall fall within the scope of protection of the present disclosure.

It should be noted that the user information (including but not limited to user device information, user personal information, etc.) and data (including but not limited to data used for analysis, stored data, displayed data, etc.) involved in the present disclosure are all information and data authorized by users or fully authorized by all parties, and the collection, use, and processing of relevant data must comply with relevant laws, regulations, and standards of relevant countries and regions, and corresponding operation entrances must be provided for users to choose to authorize or refuse.

It should be noted that the technical solutions of the embodiments of the present disclosure are applicable to a network virtual environment, and the users described generally refer to "virtual users." Real users may register user accounts on the server through registration to obtain user identities in the network environment.

The implementation details of the technical solutions of the embodiments of the present disclosure are elaborated in detail below.

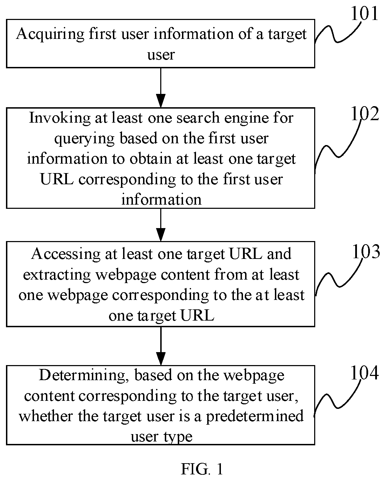

FIG. 1 is a flowchart of an embodiment of a user identification method provided by the present disclosure. The technical solution of this embodiment may be executed by a server, and the method may include the following steps:
101: acquiring first user information of a target user.

The target user may be a registered user of an online system, whose type may include an enterprise user or an individual user. The online system may provide objects for the target user to interact with, such as an e-commerce platform oriented toward enterprise users, i.e., a B-type e-commerce platform.

The first user information may include one or more of the target user's name, address, and communication account. When the target user is an enterprise user, the target user's name and address may be the enterprise name and enterprise address, and the target user's communication account may be the enterprise email address, enterprise contact phone number, and the like.

The acquiring first user information of the target user may comprise: identifying the first user information of the target user from at least one of the target user's registration information, session information, and order information.

Since the target user may be a registered user of the online system, the first user information of the target user may be identified from the target user's registration information.

The session information may be, for example, communication records between the target user and other users on the online system.

The order information may be, for example, information obtained from the target user's historical orders.

The identifying the first user information of the target user from at least one of the target user's registration information, session information, and order information may comprise: generating third prompt information based on at least one of the target user's registration information, session information, and order information; and inputting the third prompt information into the first large language model to instruct the first large language model to extract the first user information of the target user from the at least one information.

For example, it is possible to obtain from at least one of the target user's registration information, session information, and order information that the target user's name is "AAAA Co., Ltd.," and the desired first user information is "AAAA" after filtering out "Co., Ltd.," and the third prompt information can instruct the first large language model to extract the first user information.

The first large language model may be, for example, ChatGPT (Chat Generative Pre-trained Transformer) or ChatGLM (Chat General Language Model, a conversational language model supporting Chinese-English bilingual question answering), and the like.

102: invoking at least one search engine for querying based on the first user information to obtain at least one target URL corresponding to the first user information.

The invoking at least one search engine for querying based on the first user information to obtain at least one target URL corresponding to the first user information may comprise: invoking at least one search engine for querying based on the first user information; and selecting at least one target URL from the query results of the at least one search engine in order of arrangement.

The first user information may be input as a search term into the search box of the search engine for querying, to obtain one or more target URLs corresponding to the first user information.

103: accessing at least one target URL and extracting webpage content from at least one webpage corresponding to the at least one target URL.

The target URL may be in the form of a URL (Uniform Resource Locator), and at least one target URL may be accessed by clicking the URL.

A crawler tool may be used to extract webpage content from at least one webpage corresponding to at least one target URL, and remove HTML (Hyper Text Markup Language) tag content that has no semantic meaning or function and is meaningless, used only for styling and formatting purposes.

104: determining, based on the webpage content corresponding to the target user, whether the target user is a predetermined user type.

The predetermined user type may refer to the target user being an enterprise user or an individual user.

In this embodiment, by acquiring first user information of a target user, invoking at least one search engine based on the first user information to perform a query, obtaining at least one target URL corresponding to the first user information, accessing the at least one target URL, extracting webpage content from at least one webpage corresponding to the at least one target URL, and determining whether the target user is a predetermined user type based on the webpage content corresponding to the target user; by adopting a method of searching data across the entire network and combining it with the webpage content extracted from webpages, identifying whether the target user is a predetermined user type, thereby improving identification accuracy, eliminating the need for manual identification, improving the efficiency of identifying the target user, and reducing identification costs.

In some embodiments, determining whether the target user is a predetermined user type based on the webpage content corresponding to the target user may include: generating first prompt information based on the webpage content respectively corresponding to at least one target user; inputting the first prompt information into a second large language model to instruct the second large language model to determine, in conjunction with the webpage content, whether each of the at least one target user is a predetermined user type.

The second large language model and the aforementioned first large language model may be the same large language model or different large language models.

In cases where the at least one target user includes multiple users, first prompt information may be generated based on the webpage content respectively corresponding to the multiple target users, instructing the second large language model to determine, in conjunction with the webpage content, whether each of the multiple target users is a predetermined user type. Compared to determining whether one target user at a time is a predetermined user type, determining multiple target users at once can improve efficiency and reduce costs.

For example, the predetermined user type may be set as an enterprise user; when the target user is an enterprise user, second user information of the target user is acquired, and the second user information may include, for example, the target user's name, address, size, revenue, and the like.

In some embodiments, the method may further include: generating second prompt information based on second user information respectively corresponding to at least one target user; inputting the second prompt information into the second large language model to instruct the second large language model to determine, in conjunction with the second user information, whether each of the at least one target user is a predetermined user type.

In some embodiments, the webpage content may include webpage information extracted from each target URL; the at least one target user may include one target user.

Generating first prompt information based on the webpage content respectively corresponding to at least one target user may include: generating first prompt information separately based on the webpage information extracted from each target URL corresponding to the target user.

Inputting the first prompt information into the second large language model may include: inputting at least one piece of first prompt information into the second large language model respectively, to instruct the second large language model to determine, in conjunction with the respectively corresponding webpage information, whether the target user is a predetermined user type, and, in cases where the target user is a predetermined user type, acquiring third user information corresponding to the target user; generating fourth prompt information based on the third user information respectively corresponding to the at least one target URL; inputting the fourth prompt information into the second large language model to instruct the second large language model to obtain second user information corresponding to at least one specified information type by comparing the third user information respectively corresponding to the at least one target URL.

In some embodiments, relevant information of the target user that has already been acquired may also be saved to local memory, so that the relevant information of the target user may be directly used subsequently without the need to perform identification and extraction operations again to obtain the relevant information of the target user, thereby improving processing efficiency.

As an optional implementation, the method may include: saving the first user information to local memory.

Identifying the first user information of the target user from at least one of the registration information, session information, and order information of the target user may include: querying, from the local memory, the first user information corresponding to the target user; and in the event that the query fails, identifying the first user information of the target user from at least one of the registration information, session information, and order information of the target user.

As another optional implementation, the method may include: storing the webpage content corresponding to the target user into the local memory.

Invoking at least one search engine to perform a query based on the first user information to obtain at least one target URL corresponding to the first user information may include: querying, from the local memory, the webpage content corresponding to the target user; and in the event that the query fails, invoking at least one search engine to perform a query based on the first user information to obtain at least one target URL corresponding to the first user information.

In some embodiments, the first user information includes an address, and the method may further include: in the event that the address obtained from at least one of the registration information, session information, and order information of the target user is missing, completing the address in conjunction with the IP address corresponding to the target user.

In some embodiments, the method may further comprise: in the case where webpage access for any target URL fails, using the summary information corresponding to the target URL as the extracted webpage content.

The summary information may refer, for example, to a page snippet. A page snippet refers to a piece of text in search engine results that provides a brief description of webpage information, which may be a webpage title, a piece of text at the beginning of a webpage, or a specific paragraph within the webpage. Page snippets and URLs are typically what users visiting via a search engine see first; when a user clicks a URL and is unable to access the webpage, the page snippet may be used as the extracted webpage content.

In some embodiments, generating the first prompt information based on the webpage content respectively corresponding to at least one target user may include: generating the first prompt information based on the webpage content respectively corresponding to at least one target user, the execution instruction, and the output requirement; where the execution instruction is used to instruct the second large language model to determine whether at least one target user is of the predetermined user type based on the webpage content respectively corresponding to at least one target user; and the output requirement is used to instruct the second large language model to, in the event that any target user is of the predetermined user type, obtain the second user information of the target user and provide the information source of the second user information.

The output requirement may include at least one specified information type, and may additionally include a data format, etc. Accordingly, the second user information of at least one specified information type may be obtained, and the second user information may be organized according to the data format.

For ease of understanding, the following example is provided, where the control instruction in the first prompt information may be:
Your task is to retrieve information about a company named {AAAA}

The webpage content respectively corresponding to at least one target user may be, for example:
The following text between "<<<" and ">>>" is the raw content from which you can only extract:

```
 <<<Page snippet {snippet}
 Webpage content {page_content}
 >>>
```

The output requirement may be, for example:
Return information in JSON format without any comments; JSON keys include:
"found_company_name": the company name you found (referring to the original text)
"found_company_address": the company address you found (referring to the original text)
"found_company_country_code": the country/region code of the company you found
"found_company_city": the city where the found company is located
"found_company_email": company contact email (refer to original text)
"found_company_phone": company contact phone number (refer to original text)
"inference_reason": detailed reasoning for the inference (refer to original text)
"main_industry_sic_code": primary industry SIC code
"main_purchase_category": primary purchase category
"annual_revenue": annual turnover or revenue (refer to original text)
"employee_number": total number of employees (refer to original text)
"business_nature": the nature or type of the company's business (one of: online retailer, offline retailer, KOL, manufacturer, wholesaler, service provider, trader, procurement organization, or other types you have found)
"others": other information you have found
"is_a_company": if any collected company information can confirm it is a real company rather than an individual or a school, return "Yes"; otherwise return "No".

The output requirement specifies the data format of the output result, making the information in the output result more structured, facilitating subsequent processing of the output result, and improving the efficiency of information processing. The output requirement also requires that the original reference text be attached to the output result; in addition, it may also require that the URLs cited in the output result be attached, facilitating assessment of the credibility of the output result.

In some embodiments, the method may further include: obtaining the output result of the second large language model; and in the event that any target user is determined to be of the predetermined user type based on the output result, determining the user level of the target user based on the second user information of the target user.

The method may further include: determining, according to the user level of the target user, the benefit information allocated to the target user; or determining, according to the user level of the target user, in the event that the target user performs a target behavior, executing the processing operation corresponding to the user level.

For example, when the output result determines that the target user is an enterprise user, the user level of the target user is determined based on the scale of the target user, etc., and the benefit information allocated to the user is determined according to the user level; for example, the larger the scale of the target user, the higher the level, the more goods are recommended to the target user, and the more discounts the target user can enjoy when purchasing goods, etc.

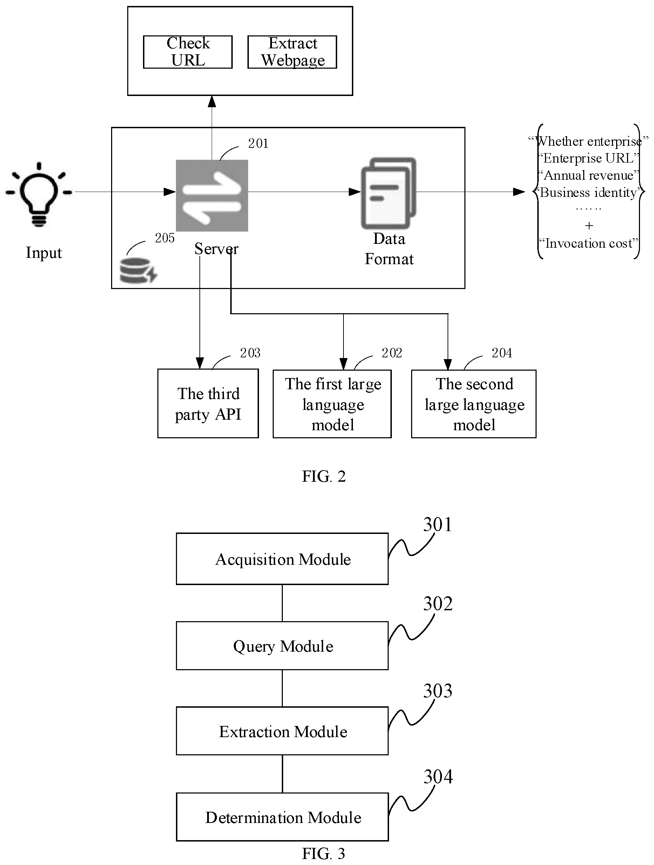

In one practical application, the technical solution of the embodiments of the present disclosure may be applied in an e-commerce scenario, where the predetermined user type may refer to enterprise buyers. For ease of understanding, the following takes the e-commerce scenario as an example and, in conjunction with the scenario interaction diagram shown in FIG. 2, introduces the technical solution of the embodiments of the present disclosure.

As shown in FIG. 2, at least one of the registration information, session information, and order information of the target user may be provided as input information to the server 201, and the input information may be acquired from an e-commerce platform; the target user may refer to any buyer registered on the e-commerce platform; of course, the server 201 may also be a server within the e-commerce platform, or may be another service node independent of the e-commerce platform.

The server 201 may generate third prompt information based on at least one of the registration information, session information, and order information of the target user, invoke the first large language model 202, and input the third prompt information into the first large language model to instruct the first large language model to extract the first user information of the target user from the at least one type of information.

The server 201 may invoke at least one search engine 203 to perform a search query based on the first user information, thereby obtaining at least one target URL corresponding to the first user information based on the search results; thereafter, the server may check the at least one target URL, access the at least one target URL when the at least one target URL is accessible, and extract webpage content from at least one webpage corresponding to the at least one target URL, where, in the event that webpage access for any target URL fails, only the summary information corresponding to that target URL may be used as the extracted webpage content.

The server 201 may generate first prompt information based on the webpage content, execution instructions, and output requirements respectively corresponding to the target users, input the first prompt information into the second large language model 204, so as to instruct the second large language model to determine, in combination with the webpage content, whether each target user is an enterprise buyer.

The execution instruction is used to instruct the second large language model to determine, based on the webpage content, whether the target user is a predetermined user type; the output requirement may be used to instruct the second large language model to, when the target user is the predetermined user type, acquire the second user information of the target user and provide the information source of the second user information.

The first prompt information may further include at least one specified information type and a data format, so that the second large language model may be invoked to acquire second user information of at least one specified information type and output the information according to the data format; as shown in FIG. 2, the information types may include "whether enterprise", "enterprise URL", "annual revenue", "business identity", "invocation cost", and the like.

In addition, the server 201 may also store the first user information corresponding to the target user to the local memory 205, or store the webpage content corresponding to the target user to the local memory 205; therefore, for a target user, it is possible to first query the local memory to determine whether corresponding first user information or webpage content exists, so as to improve processing efficiency.

In addition, the server 201 may determine the buyer level of the target user based on the second user information, so that personalized and targeted services may be provided to enterprise buyers according to the buyer level.

The embodiments of the present disclosure invoke at least one search engine to perform a query based on the first user information to obtain at least one target URL corresponding to the first user information, access the at least one target URL, and extract the webpage content from at least one webpage corresponding to the at least one target URL, and determine whether the target user is of the predetermined user type based on the webpage content corresponding to the target user. By adopting the approach of searching the entire network data and combining the webpage content extracted from webpages to identify whether the target user is of the predetermined user type, the accuracy of identification is improved, manual identification is not required, the efficiency of identifying the target user is improved, and the identification cost is reduced. The first user information or webpage content corresponding to the target user may be stored to improve processing efficiency, and by instructing the second large language model to, in the event that the target user is of the predetermined user type, obtain the second user information of the target user, and determine the buyer level of the target user based on the second user information, personalized and targeted services are provided for enterprise buyers.

FIG. 3 is a structural schematic diagram of one embodiment of a user identification apparatus provided by embodiments of the present disclosure, the apparatus including:
an acquisition module 301, configured to acquire the first user information of the target user;
a query module 302, configured to invoke at least one search engine to perform a query based on the first user information to obtain at least one target URL corresponding to the first user information;
an extraction module 303, configured to access the at least one target URL and extract the webpage content from at least one webpage corresponding to the at least one target URL;
a determination module 304, configured to determine whether the target user is of the predetermined user type based on the webpage content corresponding to the target user.

In some embodiments, the acquisition module acquiring the first user information of the target user may include: identifying the first user information of the target user from at least one of the registration information, session information, and order information of the target user.

The identifying the first user information of the target user from at least one of the target user's registration information, session information, and order information may comprise: generating third prompt information based on at least one of the target user's registration information, session information, and order information; and inputting the third prompt information into the first large language model to instruct the first large language model to extract the first user information of the target user from the at least one piece of information.

In some embodiments, the query module invoking at least one search engine to perform a query based on the first user information to obtain at least one target URL corresponding to the first user information may include: invoking at least one search engine to perform a query based on the first user information; and selecting at least one target URL from the query results of the at least one search engine in order of arrangement.

In some embodiments, the determination module determining whether the target user is of the predetermined user type based on the webpage content corresponding to the target user may include: generating first prompt information based on the webpage content respectively corresponding to at least one target user; and inputting the first prompt information into the second large language model to instruct the second large language model to determine, in conjunction with the webpage content, whether at least one target user is respectively of the predetermined user type.

Inputting the first prompt information into the second large language model to instruct the second large language model to determine, in conjunction with the webpage content, whether at least one target user is respectively of the predetermined user type may include: inputting the first prompt information into the second large language model to instruct the second large language model to determine, in conjunction with the webpage content, whether at least one target user is respectively of the predetermined user type, and in the event that any target user is of the predetermined user type, obtaining the second user information of at least one specified information type corresponding to the target user.

In addition, the webpage content may include webpage information extracted from each target URL; and the at least one target user may include one target user.

The above-described generating of first prompt information based on the webpage content respectively corresponding to at least one target user may include: generating first prompt information respectively based on webpage information extracted from each target URL corresponding to the target user.

The above inputting of the first prompt information into the second large language model may include: inputting at least one first prompt information into the second large language model respectively, to instruct the second large language model to determine, in combination with the respectively corresponding webpage information, whether the target user is of a predetermined user type, and, in a case where the target user is of the predetermined user type, acquiring third user information corresponding to the target user; generating fourth prompt information based on the third user information corresponding to each of the at least one target URL respectively; and inputting the fourth prompt information into the second large language model, to instruct the second large language model to obtain second user information corresponding to at least one specified information type by comparing the third user information corresponding to each of the at least one target URL respectively.

In some embodiments, the apparatus may further generate second prompt information based on the second user information respectively corresponding to at least one target user; and input the second prompt information into the second large language model to instruct the second large language model to determine, in combination with the second user information, whether each of the at least one target user is a predetermined user type.

In some embodiments, as an optional implementation, the apparatus may further store the first user information into local memory.

The identifying, by the acquisition module, of the first user information of the target user from at least one of the registration information, session information, and order information of the target user may include: querying the local memory for the first user information corresponding to the target user; and, when the query fails, identifying the first user information of the target user from at least one of the registration information, session information, and order information of the target user.

As another optional implementation, the apparatus may further store the webpage content corresponding to the target user into local memory.

The querying, by the query module, of at least one search engine based on the first user information to obtain at least one target URL corresponding to the first user information may include: querying the local memory for the webpage content corresponding to the target user; and, when the query fails, invoking at least one search engine based on the first user information to perform a query to obtain at least one target URL corresponding to the first user information.

In some embodiments, the first user information includes an address, and the apparatus may further, when the address obtained from at least one of the registration information, session information, and order information of the target user is incomplete, supplement the address in combination with the IP address corresponding to the target user.

In some embodiments, the apparatus may also, in the event that webpage access for any target URL fails, use the summary information corresponding to that target URL as the extracted webpage content.

In some embodiments, generating the first prompt information based on the webpage content respectively corresponding to at least one target user may include: generating the first prompt information based on the webpage content respectively corresponding to at least one target user, the execution instruction, and the output requirement; where the execution instruction is used to instruct the second large language model to determine whether at least one target user is of the predetermined user type based on the webpage content respectively corresponding to at least one target user; and the output requirement is used to instruct the second large language model to, in the event that any target user is of the predetermined user type, obtain the second user information of the target user and provide the information source of the second user information.

In some embodiments, the apparatus may further acquire an output result of the second large language model; and, when the output result indicates that any one target user is a predetermined user type, determine the user level of the target user based on the second user information of the target user.

The apparatus may further determine benefit information allocated to the target user according to the user level of the target user; or, according to the user level of the target user, execute a processing operation corresponding to the user level when the target user performs a target behavior.

The user identification apparatus described in FIG. 3 may execute the user identification method described in the embodiment shown in FIG. 1, and the implementation principles and technical effects thereof will not be repeated here. The specific manner in which each module and unit in the user identification apparatus described in the above embodiments performs operations has already been described in detail in the embodiments relating to the method, and will not be elaborated upon here.

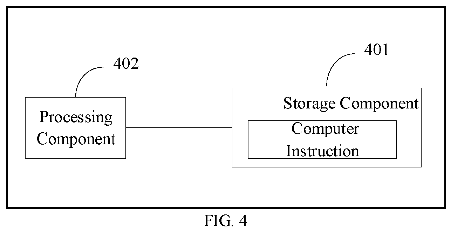

Embodiments of the present disclosure further provide a computing device, as shown in FIG. 4, which may include a storage component 401 and a processing component 402.

The storage component 401 stores one or more computer instructions, where the one or more computer instructions are invoked and executed by the processing component to implement the user identification method described in the embodiment shown in FIG. 1.

Of course, the computing device may also include other components, such as an input/output interface, a display component, a communication component, and the like.

The input/output interface provides an interface between the processing component and peripheral interface modules, where the peripheral interface modules may be output devices, input devices, and the like. The communication component is configured to facilitate wired or wireless communication between the computing device and other devices.

The processing component 402 may include one or more processors to execute computer instructions to complete all or part of the steps in the above-described method. Of course, the processing component may also be implemented as one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, microcontrollers, microprocessors, or other electronic components, for executing the above-described method.

The storage component 401 is configured to store various types of data to support operations at the terminal. The storage component may be implemented by any type of volatile or non-volatile storage device or a combination thereof, such as Static Random Access Memory (SRAM), Electrically Erasable Programmable Read-Only Memory (EEPROM), Erasable Programmable Read-Only Memory (EPROM), Programmable Read-Only Memory (PROM), Read-Only Memory (ROM), magnetic memory, flash memory, magnetic disk, or optical disk.

The display component may be an electroluminescent (EL) element, a liquid crystal display or a micro-display of similar structure, or a retinal direct display or similar laser scanning display.

It should be noted that the computing device described above may be a physical device or an elastic computing host provided by a cloud computing platform. It may be implemented as a distributed cluster composed of multiple servers or terminal devices, or may be implemented as a single server or a single terminal device.

It should be noted that, when the computing device described above implements the user identification method described in the embodiment shown in FIG. 1, it may be a physical device or an elastic computing host provided by a cloud computing platform. It may be implemented as a distributed cluster composed of multiple servers or terminal devices, or may be implemented as a single server or a single terminal device.

Embodiments of the present disclosure further provide a computer-readable storage medium storing a computer program, where the computer program, when executed by a computer, may implement the user identification method described in the embodiment shown in FIG. 1. The computer-readable medium may be included in the electronic device described in the above embodiments, or may exist independently without being assembled into the electronic device.

Embodiments of the present disclosure further provide a computer program product, which includes a computer program carried on a computer-readable storage medium, where the computer program, when executed by a computer, may implement the user identification method described in the embodiment shown in FIG. 1. In such embodiments, the computer program may be downloaded and installed from a network, and/or installed from a removable medium. When the computer program is executed by a processor, various functions defined in the system of the present disclosure are performed.

The computer-readable storage medium referred to in the foregoing embodiments may be, but is not limited to, an electrical, magnetic, optical, electromagnetic, infrared, or semiconductor system, apparatus, or device, or any combination of the above. More specific examples of the computer-readable storage medium may include, but are not limited to: an electrical connection having one or more wires, a portable computer disk, a hard disk, a Random Access Memory (RAM), a Read-Only Memory (ROM), an Erasable Programmable Read-Only Memory (EPROM), flash memory, optical fiber, a portable Compact Disc Read-Only Memory (CD-ROM), an optical storage device, a magnetic storage device, or any suitable combination of the above. In the present disclosure, a computer-readable storage medium may be any tangible medium that contains or stores a program, and the program may be used by or in combination with an instruction execution system, apparatus, or device.

Those skilled in the art can clearly understand that, for the convenience and brevity of description, the specific working processes of the systems, apparatuses, and units described above may refer to the corresponding processes in the foregoing method embodiments, and will not be repeated here.

The apparatus embodiments described above are merely illustrative, where the units described as separate components may or may not be physically separate, and the components shown as units may or may not be physical units, that is, they may be located in one place, or may be distributed over multiple network units. Some or all of the modules may be selected according to actual needs to achieve the objectives of the solution of the present embodiment. Those of ordinary skill in the art can understand and implement the solution without creative effort.

Through the above description of the embodiments, those skilled in the art can clearly understand that each embodiment may be implemented by means of software plus a necessary general-purpose hardware platform, and of course may also be implemented by hardware. Based on such understanding, the above technical solutions, in essence or the part contributing to the prior art, may be embodied in the form of a software product, and the computer software product may be stored in a computer-readable storage medium, such as ROM/RAM, magnetic disk, optical disk, etc., including several instructions for causing a computer device (which may be a personal computer, a server, or a network device, etc.) to execute the methods described in the various embodiments or certain parts of the embodiments.

Finally, it should be noted that the above embodiments are only used to illustrate the technical solutions of the present disclosure, and not to limit them; although the present disclosure has been described in detail with reference to the foregoing embodiments, those of ordinary skill in the art should understand that they may still modify the technical solutions described in the foregoing embodiments, or make equivalent substitutions for some of the technical features; and such modifications or substitutions do not cause the essence of the corresponding technical solutions to depart from the spirit and scope of the technical solutions of the embodiments of the present disclosure.

## Claims

1. A user identification method, **characterized in that** it comprises:
acquiring first user information of a target user;
invoking at least one search engine to perform a query based on the first user information, to obtain at least one target URL corresponding to the first user information;
accessing the at least one target URL, and extracting webpage content in at least one webpage corresponding to the at least one target URL;
determining, based on the webpage content corresponding to the target user, whether the target user is of a predetermined user type.

2. The method according to claim 1, wherein the determining whether the target user is a predetermined user type based on the webpage content corresponding to the target user comprises:
generating first prompt information based on the webpage content corresponding to each of at least one target user;
inputting the first prompt information into a second large language model, to instruct the second large language model to determine, in conjunction with the webpage content, whether each of the at least one target user is of the predetermined user type.

3. The method according to claim 2, wherein the inputting the first prompt information into a second large language model to instruct the second large language model to determine, in combination with the webpage content, whether each of the at least one target user is a predetermined user type comprises:
inputting the first prompt information into a second large language model, to instruct the second large language model to determine, in conjunction with the webpage content, whether each of the at least one target user is of the predetermined user type, and, in a case where any target user is of the predetermined user type, acquiring second user information of at least one specified information type corresponding to the target user.

4. The method according to any one of claims 1-3, **characterized in that** the first user information comprises one or more of the target user's name, address, and communication account;
the acquiring first user information of the target user comprises:
identifying the first user information of the target user from at least one of the target user's registration information, session information, and order information.

5. The method according to claim 4, wherein the method further comprises:
storing the first user information in a local memory;
the identifying the first user information of the target user from at least one of the target user's registration information, session information, and order information comprises: querying, from the local memory, the first user information corresponding to the target user; and in a case where the query fails, identifying the first user information of the target user from at least one of the target user's registration information, session information, and order information;
or, the method further comprises:
storing the webpage content corresponding to the target user in a local memory;
the invoking at least one search engine for querying based on the first user information to obtain at least one target URL corresponding to the first user information comprises: querying, from the local memory, the webpage content corresponding to the target user; and in a case where the query fails, invoking at least one search engine for querying based on the first user information to obtain at least one target URL corresponding to the first user information.

6. The method according to claim 4, wherein the identifying the first user information of the target user from at least one of registration information, session information, and order information of the target user comprises:
generating third prompt information based on at least one of the target user's registration information, session information, and order information;
inputting the third prompt information into the first large language model to instruct the first large language model to extract the first user information of the target user from the at least one information.

7. The method according to any one of claims 1-6, wherein the method further comprises:
in the case where webpage access for any target URL fails, using summary information corresponding to the at least one target URL as the extracted webpage content.

8. The method according to any one of claims 2-7, wherein the generating first prompt information based on webpage content respectively corresponding to at least one target user comprises:
generating first prompt information based on webpage content corresponding to at least one target user respectively, an execution instruction, and an output requirement; wherein the execution instruction is used to instruct the second large language model to determine, based on the webpage content corresponding to at least one target user respectively, whether the at least one target user is of a predetermined user type; and the output requirement is used to instruct the second large language model, in the case where any target user is of a predetermined user type, to acquire the second user information of the target user and provide the information source of the second user information.

9. The method according to any one of claims 3-8, wherein the method further comprises:
generating second prompt information based on the second user information corresponding to at least one target user respectively;
inputting the second prompt information into the second large language model to instruct the second large language model to determine, in combination with the second user information, whether each of the at least one target user is of a predetermined user type.

10. The method according to any one of claims 3-9, wherein the method further comprises:
acquiring the output result of the second large language model;
in the case where it is determined based on the output result that any target user is of a predetermined user type, determining a user level of the target user based on the second user information of the target user.

11. The method according to claim 10, wherein the method further comprises:
determining, according to the user level of the target user, benefit information allocated to the target user; or according to the user level of the target user, in the case where the target user performs a target behavior, executing a processing operation corresponding to the user level.

12. The method according to any one of claims 3-11, wherein the webpage content comprises webpage information extracted for each target URL; the at least one target user comprises one target user;
the generating first prompt information based on webpage content corresponding to at least one target user respectively comprises:
generating first prompt information respectively based on webpage information extracted from each target URL corresponding to the target user;
the inputting the first prompt information into the second large language model comprises:
inputting at least one first prompt information into the second large language model respectively, to instruct the second large language model to determine, in combination with the respectively corresponding webpage information, whether the target user is of a predetermined user type, and, in a case where the target user is of the predetermined user type, acquiring third user information corresponding to the target user;
generating fourth prompt information based on the third user information corresponding to the at least one target URL respectively;
inputting the fourth prompt information into the second large language model to instruct the second large language model to obtain second user information corresponding to at least one specified information type by comparing the third user information corresponding to the at least one target URL respectively.

13. A computing device, **characterized in that** it comprises a processing component and a storage component; the storage component stores one or more computer instructions; the one or more computer instructions are configured to be invoked and executed by the processing component to implement the user identification method according to any one of claims 1 to 12.

14. A computer storage medium, **characterized in that** it stores a computer program, and when the computer program is executed by a computer, the user identification method according to any one of claims 1 to 12 is implemented.

15. A computer program product, comprising a computer program carried on a computer-readable storage medium, wherein when the computer program is executed in a computer, the user identification method according to any one of claims 1 to 12 is implemented.
